(19) Europäisches Patentamt
European Patent Office
Office européen des brevets

(11) **EP 4 260 965 B1**

(12) **EUROPEAN PATENT SPECIFICATION**

(45) Date of publication and mention
of the grant of the patent:
**19.11.2025 Bulletin 2025/47**

(21) Application number: **21903457.6**

(22) Date of filing: **09.12.2021**

(51) International Patent Classification (IPC):
*B22F 1/00* *(2022.01)*       *C22C 38/00* *(2006.01)*
*C22C 38/04* *(2006.01)*       *C22C 38/44* *(2006.01)*
*C22C 38/46* *(2006.01)*       *C22C 33/02* *(2006.01)*
*B33Y 70/00* *(2020.01)*       *B22F 10/28* *(2021.01)*
*C22C 38/02* *(2006.01)*       *C21D 6/00* *(2006.01)*
*B22F 9/08* *(2006.01)*       *B22F 3/24* *(2006.01)*

(52) Cooperative Patent Classification (CPC):
**C22C 38/02; B22F 1/00; B22F 10/28; B33Y 70/00;**
**C22C 33/0264; C22C 38/04; C22C 38/44;**
**C22C 38/46;** B22F 3/24; B22F 9/082; B22F 10/64;
C21D 1/25; C21D 1/58; C21D 6/004; Y02P 10/25

(86) International application number:
**PCT/JP2021/045247**

(87) International publication number:
**WO 2022/124358 (16.06.2022 Gazette 2022/24)**

(54) **FE-GROUP ALLOY POWDER**

EISENGRUPPENLEGIERUNGSPULVER

POUDRE D'ALLIAGE DU GROUPE FE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **10.12.2020 JP 2020205377**

(43) Date of publication of application:
**18.10.2023 Bulletin 2023/42**

(73) Proprietor: **Sanyo Special Steel Co., Ltd.**
**Himeji-shi, Hyogo 672-8677 (JP)**

(72) Inventors:
• **HAGIYA, Toru**
**Himeji-shi, Hyogo 672-8677 (JP)**
• **KUSE, Tetsuzi**
**Himeji-shi, Hyogo 672-8677 (JP)**
• **IKEDA, Hiroki**
**Himeji-shi, Hyogo 672-8677 (JP)**
• **MUTOU, Yasumasa**
**Himeji-shi, Hyogo 672-8677 (JP)**

(74) Representative: **Müller-Boré & Partner**
**Patentanwälte PartG mbB**
**Friedenheimer Brücke 21**
**80639 München (DE)**

(56) References cited:
EP-A1- 3 425 079          WO-A1-2018/139185
WO-A1-2019/220917          WO-A1-2019/220917
AU-B2- 2003 224 591          JP-A- 2016 145 407
JP-A- 2019 085 633          JP-A- 2019 085 633
JP-A- 2019 504 197          JP-A- 2020 132 891

**Description**

FIELD OF THE INVENTION

The present invention relates to an Fe-based alloy powder suitable as a steel powder for a hot work tool. Specifically, the present invention relates to an Fe-based alloy powder suitable for a process for producing a shaped article, such as a three-dimensional additive manufacturing method, a thermal spraying method, a laser coating method, a cladding method, or a hot isostatic pressing method.

BACKGROUND ART

In recent years, an additive manufacturing method has been applied in production of shaped articles composed of metals. Typified systems for a metal additive manufacturing method include a powder bed system (powder bed fusion system) and a metal deposition system (direct energy deposition system).

In a powder bed system, a portion irradiated with a laser beam or an electron beam, of a powder which has been spread, is molten and solidified. Such melting and solidification lead to bonding of particles in the powder. Such irradiation is applied selectively to a portion of a metal powder. Portions not irradiated are not molten. A bonding layer is formed only at the portion irradiated.

On the bonding layer thus formed, a further metal powder is newly spread, and the newly spread metal powder is irradiated with a laser beam or an electron beam. The irradiation results in melting and solidification of metal particles in the metal powder, and a new bonding layer is formed. The new bonding layer is also bonded with the existing bonding layer.

Such melting and solidification due to irradiation are sequentially repeated to result in gradual growth of an assembly of bonding layers. This growth provides a shaped article having a three-dimensional shape. Such an additive manufacturing method is used to thereby easily obtain a shaped article having a complicated shape.

There is disclosed, as an additive manufacturing method of a powder bed system, a procedure in which a shaped article having a three-dimensional shape is produced by using a mixed powder of an iron-based powder with a powder of one or more selected from the group consisting of nickel, a nickel-based alloy, copper, a copper-based alloy and graphite, as a metal powder for metal stereolithography, and repeating a powder layer formation step of bedding such a metal powder, a sintered layer formation step of irradiating the powder layer with a beam to form a sintered layer and a removal step of cutting a surface of a shaped article, to thereby form a sintered layer (see Patent Document 1).

A metal additive manufacturing method attracts attention also as a technique for shaping a mold, and use of steel grades including maraging steel and SKD61 as specific powder materials is tried. However, such steel grades have a low heat conductivity of about 20 W/m/K. Thus, when the method is applied to molds for hot stamping, cooling efficiencies of such molds by themselves decrease. Accordingly, it takes time to cool molds in use as molds, leading to a decrease in cycle speed for continuous production.

For a mold formed by a conventional forging method such as cogging, steel for a mold is proposed which has a high degree of hardness and high heat conduction and which can be applied to die-casting and hot stamping (see Patent Document 2). However, the steel for a mold, proposed, is not a material expected to be produced by a metal additive manufacturing method, but a material expected to be produced by a conventional forging method. The steel for a mold, proposed, is for a mold by a conventional production method such as a forging method, and thus has the problem of easily causing coarse carbides serving as the point of origin for fatigue failure, and can be hardly said to be sufficient for use in a metal additive manufacturing method.

As steel for a mold, which can be applied to a metal additive manufacturing method, a powder is proposed which has a composition in which $0.15 < C < 0.34$, $0.0 < Si < 0.52$, $4.00 < Cr < 5.72$, $-0.05814 \times [Cr] + 0.4326 < Mn < -0.2907 \times [Cr] + 2.4628$, $0.72 < Mo < 1.60$ and $0.20 < V < 0.61$ are satisfied and the balance is composed of Fe and unavoidable impurities (see Patent Document 3). However, the steel for a mold, proposed, has a heat conductivity of at most 25.2 to 34.7 W/m/K, and there is not provided any steel for a mold, which has high heat conducting properties, more than 35.0 W/m/K required in the market, and also has strength and which is suitable for additive manufacturing. Patent document 4 provides an additively manufactured hot work tool from a powder having a composition containing, in mass%, 0.3-0.5% of C, 2.0% or less of Si, 1.5% or less of Mn, 0.05% or less of P, 0.05% or less of S, 3.0-6.0% of Cr, 0.5-3.5% of one or two among Mo and W according to the relational expression of (Mo+1/2W), 0.1-1.5% of V, 0-1.0% of Ni, 0-1.0% of Co, and 0-0.3% of Nb, with the remainder comprising Fe and impurities.

CITATION LIST

PATENT DOCUMENTS

EP 4 260 965 B1

Patent Document 1: JP 2008-81840 A
Patent Document 2: JP 2018-119177 A
Patent Document 3: JP 2015-224363 A
Patent Document 4: WO 2019/220917 A1
Patent Document 5: JP 2019-085633 A

SUMMARY OF THE INVENTION

Conventionally, steel grades including maraging steel and SKD61, applied to an additive manufacturing method, have been low in heat conductivity, and thus such steel grades, when applied to molds requiring cooling mechanisms such as die-casting and hot stamping, have taken time until cooling of the molds and thus have caused a decrease in production cycle speed. There is then a need for steel for a mold, having a high heat conductivity and increasing cooling efficiency.

In addition, steel for molds is required to have high hardness. In order to enhance hardness, various alloy elements are added. Alloy elements added are in the form of solid solutions in matrices. Such alloy elements in the form of solid solutions in matrices lead to an increase in scattering frequencies of conductive electrons in the matrices, and thus generally serve to decrease heat conductivity. Alloy elements are then demanded to be decreased as much as possible for an increase in heat conductivity, but it is necessary to ensure hardness characteristics demanded for steel for molds.

One problem to be solved by the present invention is to provide a steel powder for a hot work tool, suitable for additive manufacturing, wherein a stacked shaped article produced by the powder can satisfy both high heat conducting properties and hardness (quenching and tempering hardness, and hardness after retention at a high temperature and softening).

Another problem to be solved by the present invention is to provide a steel powder for a hot work tool, which can be suitably used for producing a hot work tool such as a mold by a shaping method such as an additive manufacturing method of a powder bed system, wherein the steel powder for a hot work tool has a fluidity appropriate for uniformly bedding the powder.

The present inventors have intensively advanced developments, and as a result, have found that a shaped article, when produced with an Fe-based alloy powder satisfying a composition within a prescribed range and formulae 1 and 2 and having a specified size, can satisfy both high heat conductivity and hardness (quenching and tempering hardness, and hardness after retention at a high temperature and softening) and is suitable for a hot work tool such as a mold.

The present invention relates to an Fe-based alloy powder according to claim 1.

According to the present invention, an Fe-based alloy powder is provided which can be suitably used as a raw material powder in production of a hot work tool such as a mold by a shaping method such as an additive manufacturing method of a powder bed system. The Fe-based alloy powder of the present invention has an appropriate fluidity, and a shaped article produced from the powder not only can have a heat conductivity of 34.0 W/m/K or more and a quenching and tempering hardness of 48.0 HRC or more, but also can have a hardness of 33.0 HRC or more after retention at 600°C for 100 hours. Accordingly, the Fe-based alloy powder of the present invention can be suitably applied for producing a hot work tool such as a mold having both a high heat conductivity and a high degree of hardness, by additive manufacturing.

DETAILED DESCRIPTION OF THE INVENTION

<Fe-based alloy powder>

First, the reasons why the compositional range of the Fe-based alloy powder of the present invention is prescribed are described before the descriptions of a shaped article produced with the Fe-based alloy powder of the present invention.

The Fe-based alloy powder of the present invention is an Fe-based alloy powder consisting of, in mass%:

$$0.40 < C < 0.70;$$

$$0.03 \leq Si \leq 0.40;$$

$$Mn < 0.90;$$

$$Cr \leq 2.00;$$

$$Ni < 2.00;$$

$$0.90 < Mo < 1.20;$$

$$W < 2.00;$$

$$V < 0.60;$$

and I

$$0.01 \leq Al < 0.10;$$

and

the balance consisting of Fe and unavoidable impurities,
wherein, assuming that:

respective amounts of C, Si, Mn, Cr, Ni, Mo, W, V and Al contained in the Fe-based alloy powder are designated as [C] (mass%), [Si] (mass%), [Mn] (mass%), [Cr] (mass%), [Ni] (mass%), [Mo] (mass%), [W] (mass%), [V] (mass%) and [Al] (mass%);

$$K1 = 9.2\,[C] + 3.7\,[Si] + 18.1\,[Mo] + 0.8\,[W];$$

and

$$K2 = 70.2 - 22.1\,[C] - 1.6\,[Si] - 5.4\,[Mn] - 5.8\,[Cr] - 5.2\,[Ni] - 5.3\,[Mo] - 1.0\,[W] - 2.5\,[V] - 0.3\,[Al],$$

the Fe-based alloy powder satisfies formulae (1) and (2):

$$K1 \geq 24.0 \quad (1)$$

$$K2 > 29.0 \quad (2),$$

and
wherein the Fe-based alloy powder has an average particle size $D_{50}$ of 200 μm or less, and wherein the average particle size D50 is measured by a laser diffraction scattering method. Herein, "%" with respect to each of the following chemical components means mass%.

C: more than 0.40% and less than 0.70%

C is an element which is formed into a solid solution to thereby reinforce a matrix, and furthermore which forms carbides to promote the precipitation effect. While steel for a mold according to a conventional forging method has the problem of facilitating micro segregation due to an increase in amount of carbon, steel according to additive manufacturing can be rapidly cooled to thereby provide fine carbides and thus can be enhanced in hardness with containing a larger amount of carbon than a forging material. When the amount of C exceeds 0.40%, sufficient quenching and tempering hardness can be obtained. On the other hand, when the amount of C is 0.70% or more, micro segregation is facilitated to result in deterioration in toughness. Furthermore, the amount of C in the form of a solid solution is increased to result in a decrease in heat conductivity of steel. The amount of C is then set to more than 0.40% and less than 0.70%. The amount of C is preferably 0.45% or more. The amount of C may be, for example, 0.50% or more. The amount of C is preferably 0.65% or less, more preferably 0.60% or less. The above lower limit values may be each combined with any of the above upper limit values. In one preferable embodiment, the amount of C is more than 0.40% and 0.60% or less.

Si: more than 0.03% and less than 0.40%

Si is an element which is formed into a solid solution in a matrix to result in an enhancement in hardness. In addition, the element has the effect of enhancing softening resistance. However, Si, when the amount thereof is 0.60% or more, forms no carbide and is molten into a matrix, thereby resulting in a significant decrease in heat conductivity. According to the invention, the amount of Si is 0.40% or less, more preferably 0.30% or less. According to the invention, the amount of Si is 0.03% or more. The amount of Si may be, for example, 0.05% or more, 0.10% or more or 0.15% or more. The above lower limit values may be each combined with any of the above upper limit values.

Mn: less than 0.90%

Mn is an element which enhances quenching ability and which suppresses deterioration in toughness due to bainite formation. In addition, the element has the effect of enhancing softening resistance. However, Mn, when the amount thereof is 0.90% or more, is formed into a solid solution in a matrix to result in a decrease in heat conductivity. The amount of Mn is then set to less than 0.90%. The amount of Mn is preferably less than 0.80%. The amount of Mn may be, for example, 0.75% or less, 0.70% or less, 0.65% or less or 0.60% or less. The lower limit value of the amount of Mn may be 0%, or may be more than 0%. The amount of Mn is preferably 0.10% or more. The amount of Mn may be, for example, 0.15% or more, 0.20% or more, 0.25% or more or 0.30% or more. The above lower limit values may be each combined with any of the above upper limit values.

Cr: 2.00% or less

Cr is an element which enhances quenching ability and which suppresses deterioration in toughness due to bainite formation. In addition, the element has the effect of enhancing softening resistance. However, Cr, when the amount thereof is 4.00% or more, is formed into a solid solution in a matrix to result in a decrease in heat conductivity. According to the invention, the amount of Cr is 2.00% or less. The lower limit value of the amount of Cr is preferably more than 0% from the viewpoint of an enhancement in oxidation resistance. The amount of Cr is preferably 0.04% or more, more preferably 0.10% or more, more preferably 0.20% or more, more preferably 0.30% or more, more preferably 0.40% or more, more preferably 0.50% or more. The above lower limit values may be each combined with any of the above upper limit values.

Ni: less than 2.00%

Ni is an element which enhances quenching ability and which suppresses deterioration in toughness due to bainite formation. However, Ni forms no carbide and is molten into a matrix, thereby resulting in a decrease in heat conductivity. When the amount of Ni is 2.00% or more, heat conductivity is significantly decreased. The amount of Ni is then set to less than 2.00%. The amount of Ni is preferably 1.96% or less, more preferably 1.90% or less, more preferably 1.80% or less, more preferably 1.70% or less, more preferably 1.60% or less, more preferably 1.50% or less. The lower limit value of the amount of Ni may be 0%, or may be more than 0%. The amount of Ni is preferably 0.02% or more. The amount of Ni may be, for example, 0.10% or more, 0.20% or more, 0.30% or more, 0.40% or more, or 0.50% or more. The above lower limit values may be each combined with any of the above upper limit values.

Mo: more than 0.90% and less than 1.20%

Mo is an element which promotes secondary hardening in tempering to enhance quenching and tempering hardness. Mo less contributes to a decrease in heat conductivity due to addition thereof, and has a large effect of enhancing hardness. The amount of Mo is then set to more than 0.90%. However, when the amount of Mo is 1.20% or more, the remaining Mo in a matrix is increased to result in a decrease in heat conductivity. The amount of Mo is then set to more than 0.90% and less than 1.20%. The amount of Mo is preferably 0.93% or more and 1.18% or less.

W: less than 2.00%

W is an element which promotes secondary hardening in tempering to enhance quenching and tempering hardness. However, when the amount of W is 2.00% or more, the remaining W in a matrix is increased to result in a decrease in heat conductivity. The amount of W is then set to less than 2.00%. The amount of W is preferably 1.97% or less. The amount of W may be, for example, 1.90% or less, 1.80% or less, 1.70% or less, 1.60% or less, or 1.50% or less. The lower limit value of the amount of W may be 0%, or may be more than 0%. The amount of W is preferably 0.02% or more. The amount of W may be, for example, 0.10% or more, 0.20% or more, 0.30% or more, 0.40% or more, or 0.50% or more. The above lower limit values may be each combined with any of the above upper limit values.

V: less than 0.60%

V is an element which promotes secondary hardening in tempering to enhance quenching and tempering hardness. However, when the amount of V is 0.60% or more, the remaining V in a matrix is increased to result in a decrease in heat conductivity. The amount of V is then set to less than 0.60%. The amount of V is preferably 0.57% or less, more preferably 0.50% or less, more preferably 0.45% or less. The lower limit value of the amount of V may be 0%, or may be more than 0%. The amount of V is preferably 0.01% or more, more preferably 0.10% or more, more preferably 0.20% or more, more preferably 0.25% or more. The above lower limit values may be each combined with any of the above upper limit values. In one preferable embodiment, the amount of V is 0.25% or more and 0.45% or less.

Al: 0.01% or more and less than 0.10%

Al is an element which forms nitride to suppress coarsening of a crystal grain during rapid cooling. However, when 0.10% or more of Al is added, excess Al nitride is formed to result in deterioration in toughness. The amount of Al is then set to less than 0.10%. The amount of Al is preferably 0.09% or less. The amount of Al may be, for example, 0.08% or less, or 0.07% or less. The amount of Al is 0.01% or more. The amount of Al may be, for example, 0.02% or more, or 0.03% or more. The above lower limit values may be each combined with any of the above upper limit values.

## Formula (1): K1 $\geq$ 24.0

Assuming that the respective amounts of C, Si, Mo and W contained in the Fe-based alloy powder of the present invention are designated as [C] (mass%), [Si] (mass%), [Mo] (mass%) and [W] (mass%), K1 is defined as follows.

$$K1 = 9.2 [C] + 3.7 [Si] + 18.1 [Mo] + 0.8 [W]$$

The value of K1 is an index of quenching and tempering hardness. As the value of K1 is larger, quenching and tempering hardness is higher. In order that the value of K1 is increased, addition of elements such as C, Si, Mo, and W is effective, and in particular, addition of C and Mo is effective. A component composition in which the value of K1 is more than 21.7 can be set to thereby allow a shaped article produced from the powder of the present invention to have excellent hardness, e.g., a quenching and tempering hardness of 48.0 HRC or more. According to the invention, the value of K1 is 24.0 or more, or 25.0 or more. The upper limit value of K1 may be, for example, 35.0, 33.0, or 30.0. The above upper limit values may be each combined with any of the above lower limit values.

## Formula (2): K2 > 29.0

Assuming that the respective amounts of C, Si, Mn, Cr, Ni, Mo, W, V and Al contained in the Fe-based alloy powder of the present invention are designated as [C] (mass%), [Si] (mass%), [Mn] (mass%), [Cr] (mass%), [Ni] (mass%), [Mo] (mass%), [W] (mass%), [V] (mass%) and [Al] (mass%), K2 is defined as follows.

K2 = 70.2 - 22.1 [C] - 1.6 [Si] - 5.4 [Mn] - 5.8 [Cr] - 5.2 [Ni] - 5.3 [Mo] - 1.0 [W] - 2.5 [V] - 0.3 [Al]

The value of K2 is an index of heat conductivity. When the value of K2 is 29.0 or less, the amount of the remaining alloy element in a matrix is increased to result in a decrease in heat conductivity. The value of K2 is then set to more than 29.0. The value of K2 may be, for example, 30.0 or more, 31.0 or more, 32.0 or more, or 33.0 or more. The upper limit value of K2 is, for example, 50.0. The above upper limit value may be combined with any of the above lower limit values.

Average particle size $D_{50}$: 200 $\mu$m or less

In order that a powder is sequentially smoothly bedded by additive manufacturing in a powder bed system, such a powder is demanded to have fluidity. The average particle size $D_{50}$ of the powder of the present invention is then set to 200 $\mu$m or less from the viewpoint of ease of production of a shaped article. The average particle size $D_{50}$ is preferably 10 $\mu$m or more and 100 $\mu$m or less, more preferably 20 $\mu$m or more and 60 $\mu$m or less, more preferably 25 $\mu$m or more and 45 $\mu$m or less.

The average particle size $D_{50}$ is a particle size at a point where the cumulative volume of the powder is 50% in a volume-based cumulative frequency distribution curve which is determined under the assumption that the total volume of the powder is 100%. The average particle size $D_{50}$ is measured by a laser diffraction scattering method. Examples of an apparatus suitable for the measurement include a laser diffraction scattering particle size distribution analyzer "Microtrac MT3000" manufactured by Nikkiso Co., Ltd. The powder is poured together with pure water into the cell of the analyzer, and the particle size is detected based on the information on light scattering of particles.

<Shaped article>

The shaped article, not forming part of the present invention, is a shaped article produced from the Fe-based alloy powder of the present invention. The powder material for shaping, for use in the production of the shaped article, may be configured by only the Fe-based alloy powder of the present invention, or may include any material other than the Fe-based alloy powder of the present invention. The powder material for shaping may include, for example, a powder binder (for example, resin powder).

The shaped article includes an Fe-based alloy having substantially the same composition as that of the Fe-based alloy powder of the present invention.

The shaped article is preferably composed of the Fe-based alloy. The composition of the Fe-based alloy is substantially the same as the composition of the Fe-based alloy powder of the present invention. Accordingly, the descriptions of the respective amounts of C, Si, Mn, Cr, Ni, Mo, W, V and Al contained in the Fe-based alloy powder of the present invention, and the descriptions of formulae 1 and 2 are also applied to the above Fe-based alloy.

In one embodiment, not forming part of the invention, the method for producing the shaped article of the present invention includes:

Step (1) of preparing for the Fe-based alloy powder of the present invention, and
Step (2) of melting and solidifying the Fe-based alloy powder prepared in step (1), to obtain a shaped article.

The step of melting and solidifying the Fe-based alloy powder preferably includes subjecting the Fe-based alloy powder to a rapid melting process and a rapid cooling process for solidification. Examples of a shaping method including these processes include a three-dimensional additive manufacturing method, a thermal spraying method, a laser coating method, and a cladding method, and in particular, a three-dimensional additive manufacturing method is preferable. The three-dimensional additive manufacturing method can be performed by use of, for example, a 3D printer. The three-dimensional additive manufacturing method is preferably an additive manufacturing method of a powder bed system. Hereinafter, the additive manufacturing method of a powder bed system is described.

A 3D printer is used in the additive manufacturing method of a powder bed system, and the Fe-based alloy powder bedded is irradiated with a laser beam or an electron beam. The irradiation allows for rapid heating and rapid melting of particles. The particles are then rapidly solidified. The melting and solidification allow for bonding of the particles. The irradiation is selectively applied to one portion of the Fe-based alloy powder. A portion of the Fe-based alloy powder, not irradiated, is not molten. A bonding layer is formed on only such a portion irradiated.

An additional Fe-based alloy powder is bedded on the bound layer. Such an Fe-based alloy powder is irradiated with a laser beam or an electron beam. The irradiation allows for rapid melting of particles. The particles are then rapidly solidified. The melting and solidification allow for bonding of particles in such an Fe-based alloy powder, and a new bonding layer is formed. Such a new bonding layer is also bonded with the existing bonding layer.

A procedure involving bedding the Fe-based alloy powder at a thickness of several tens micrometers and performing bonding by irradiation is repeated to thereby gradually grow an assembly of bonding layers. Such growth provides a shaped article having a desired three-dimensional shape. Such an additive manufacturing method easily provides a shaped article having a complicated shape.

Heat conductivity of shaped article after quenching and tempering treatment: 34.0 W/m/K or more

The heat conductivity of the shaped article after quenching and tempering treatment is largely associated with the cooling efficiency in use of the shaped article for a hot work tool such as a mold for hot stamping or die-casting, and thus is a value relating to the production cycle speed. For an enhancement in cooling efficiency, the heat conductivity at an ordinary temperature, of the shaped article after quenching and tempering treatment, is preferably 34.0 W/m/K or more, more preferably 40.0 W/m/K or more. The "ordinary temperature" means 25±5°C, preferably 25°C.

Hardness (quenching and tempering hardness) of shaped article after quenching and tempering treatment: 48.0 HRC or more

The hardness of the shaped article after quenching and tempering treatment is a value necessary for allowing the shaped article to obtain a sufficient lifetime in use of the shaped article for a hot mold such as a mold for hot stamping or die-casting. Thus, the hardness of the shaped article after quenching and tempering treatment is preferably 48.0 HRC or more, more preferably 50.0 HRC or more.

Hardness of shaped article after retention at 600°C for 100 hours: 33.0 HRC or more

Evaluation of the hardness of the shaped article after retention at 600°C for 100 hours can be said to be important for realization of an increase in lifetime of a hot work tool such as a mold for hot stamping or die-casting. This is because the shaped article, when ensures softening resistance properties enabling hardness to be kept at a high temperature, can be said to be hardly lost in hardness even if used as a hot work tool such as a mold for a long time. Thus, the hardness of the shaped article after retention at 600°C for 100 hours is preferably 33.0 HRC or more. Herein, the hardness of the shaped article after retention at 600°C for 100 hours is measured after retention at 600°C for 100 hours of the shaped article after quenching and tempering treatment.

EXAMPLES

(Examples 1 to 25 and Comparative Examples 1 to 13)

Each Fe-based alloy powder of Examples 1 to 25 and Comparative Examples 1 to 13 was obtained by gas-atomizing a raw material containing chemical components described in Table 1A and Table 1B. Specifically, the raw material was subjected to high-frequency induction heating in vacuum in an alumina crucible, to provide a molten alloy, the molten alloy was then dropped through a nozzle having a diameter of 5 mm, disposed on the bottom of the crucible, an argon gas was sprayed onto the molten metal and the molten metal was refined and rapidly cooled by this spraying, to thereby obtain a large number of fine powders. The powders obtained were sieved so that the diameter of each particle was 63 $\mu$m or less, and thus each Fe-based alloy powder of Examples 1 to 25 and Comparative Examples 1 to 13 was obtained. The respective average particle sizes $D_{50}$ ($\mu$m) of the Fe-based alloy powders of Examples 1 to 25 and Comparative Examples 1 to 13 are shown in Table 1A and Table 1B. The average particle sizes $D_{50}$ were each measured by a laser diffraction scattering method as follows. Examples 2, 3, 6, 11, 15, 19, 22-24 in table 1A are comparative examples not forming part of the invention.

[Table 1A]

Table 1A

| | Chemical components (mass%) | | | | | | | | | K1 | K2 | D50 (μm) |
|---|---|---|---|---|---|---|---|---|---|---|---|---|
| | C | Si | Mn | Cr | Ni | Mo | W | V | Al | | | |
| Example 1 | 0.59 | 0.37 | 0.69 | 1.34 | 0.10 | 1.07 | 0.37 | 0.22 | 0.02 | 26.46 | 37.95 | 33.00 |
| Example 2 | 0.61 | 0.22 | 0.51 | 1.50 | 1.55 | 0.95 | 0.12 | 0.15 | 0.08 | 23.72 | 31.30 | 35.00 |
| Example 3 | 0.61 | 0.53 | 0.60 | 0.05 | 0.51 | 1.12 | 0.19 | 0.01 | 0.04 | 28.00 | 43.53 | 42.00 |
| Example 4 | 0.64 | 0.36 | 0.77 | 0.34 | 1.50 | 0.98 | 1.97 | 0.28 | 0.05 | 26.53 | 33.67 | 31.00 |
| Example 5 | 0.57 | 0.37 | 0.20 | 0.78 | 1.64 | 0.93 | 1.80 | 0.54 | 0.01 | 24.89 | 34.80 | 28.00 |
| Example 6 | 0.45 | 0.16 | 0.10 | 0.04 | 1.60 | 0.96 | 0.84 | 0.26 | 0.03 | 22.78 | 44.32 | 44.00 |
| Example 7 | 0.60 | 0.18 | 0.62 | 0.08 | 1.94 | 1.11 | 0.79 | 0.07 | 0.04 | 26.91 | 35.89 | 43.00 |
| Example 8 | 0.62 | 0.24 | 0.63 | 1.54 | 0.67 | 1.18 | 1.51 | 0.48 | 0.09 | 29.16 | 31.31 | 43.00 |
| Example 9 | 0.56 | 0.40 | 0.54 | 0.06 | 1.66 | 1.15 | 0.12 | 0.57 | 0.06 | 27.54 | 37.63 | 27.00 |
| Example 10 | 0.55 | 0.39 | 0.56 | 1.96 | 0.82 | 1.10 | 0.55 | 0.06 | 0.04 | 26.85 | 32.22 | 37.00 |
| Example 11 | 0.45 | 0.11 | 0.54 | 1.57 | 0.98 | 0.95 | 0.32 | 0.54 | 0.07 | 22.00 | 36.24 | 26.00 |
| Example 12 | 0.54 | 0.17 | 0.56 | 1.21 | 1.74 | 1.15 | 1.20 | 0.31 | 0.08 | 27.37 | 30.81 | 42.00 |
| Example 13 | 0.48 | 0.07 | 0.20 | 0.54 | 1.96 | 1.04 | 0.66 | 0.46 | 0.03 | 24.03 | 37.75 | 41.00 |
| Example 14 | 0.52 | 0.10 | 0.73 | 1.99 | 0.21 | 1.05 | 0.92 | 0.02 | 0.05 | 24.90 | 35.42 | 38.00 |
| Example 15 | 0.45 | 0.45 | 0.70 | 3.07 | 0.12 | 1.06 | 1.12 | 0.22 | 0.01 | 25.89 | 30.03 | 25.00 |

(continued)

| | Chemical components (mass%) | | | | | | | | | K1 | K2 | D50 (μm) |
|---|---|---|---|---|---|---|---|---|---|---|---|---|
| | C | Si | Mn | Cr | Ni | Mo | W | V | Al | | | |
| Example 16 | 0.47 | 0.28 | 0.45 | 1.65 | 0.81 | 1.01 | 1.26 | 0.31 | 0.09 | 24.65 | 35.74 | 25.00 |
| Example 17 | 0.45 | 0.35 | 0.26 | 1.08 | 1.31 | 0.97 | 1.64 | 0.01 | 0.05 | 24.30 | 38.39 | 25.00 |
| Example 18 | 0.49 | 0.39 | 0.57 | 1.97 | 1.15 | 1.11 | 1.34 | 0.45 | 0.04 | 27.11 | 29.90 | 32.00 |
| Example 19 | 0.46 | 0.06 | 0.16 | 0.04 | 0.87 | 1.00 | 0.08 | 0.43 | 0.04 | 22.62 | 47.85 | 34.00 |
| Example 20 | 0.57 | 0.15 | 0.54 | 1.45 | 1.32 | 1.14 | 1.82 | 0.55 | 0.02 | 27.89 | 29.93 | 25.00 |
| Example 21 | 0.47 | 0.23 | 0.68 | 0.61 | 1.62 | 1.12 | 0.10 | 0.07 | 0.02 | 25.53 | 37.59 | 30.00 |
| Example 22 | 0.65 | 0.54 | 0.35 | 2.02 | 0.11 | 1.11 | 0.35 | 0.04 | 0.07 | 28.35 | 34.44 | 35.00 |
| Example 23 | 0.57 | 0.55 | 0.51 | 2.14 | 0.10 | 1.03 | 0.02 | 0.59 | 0.01 | 25.94 | 34.08 | 42.00 |
| Example 24 | 0.50 | 0.10 | 0.26 | 1.01 | 0.02 | 1.03 | 0.04 | 0.41 | 0.08 | 23.65 | 45.08 | 31.00 |
| Example 25 | 0.53 | 0.03 | 0.28 | 1.17 | 0.58 | 1.10 | 0.24 | 0.10 | 0.05 | 25.09 | 40.79 | 27.00 |

$$K1 = 9.2\,[C] + 3.7\,[Si] + 18.1\,[Mo] + 0.8\,[W]$$

$$K2 = 70.2 - 22.1\,[C] - 1.6\,[Si] - 5.4\,[Mn] - 5.8\,[Cr] - 5.2\,[Ni] - 5.3\,[Mo] - 1.0\,[W] - 2.5\,[V] - 0.3\,[Al]$$

Table 1B

| | Chemical components (mass%) | | | | | | | | | K1 | K2 | D50 (μm) |
|---|---|---|---|---|---|---|---|---|---|---|---|---|
| | C | Si | Mn | Cr | Ni | Mo | W | V | Al | | | |
| Comparative Example 1 | 0.37 | 0.08 | 0.41 | 3.31 | 1.50 | 0.93 | 1.23 | 0.47 | 0.09 | 21.52 | 25.32 | 44 |
| Comparative Example 2 | 0.72 | 0.14 | 0.52 | 2.29 | 1.45 | 1.04 | 0.18 | 0.16 | 0.06 | 26.11 | 24.32 | 30 |
| Comparative Example 3 | 0.46 | 0.61 | 0.18 | 3.94 | 0.15 | 1.08 | 0.17 | 0.55 | 0.02 | 26.17 | 27.18 | 25 |
| Comparative Example 4 | 0.48 | 0.03 | 0.94 | 1.76 | 1.53 | 0.92 | 0.14 | 0.03 | 0.08 | 21.29 | 31.19 | 37 |
| Comparative Example 5 | 0.67 | 0.40 | 0.43 | 4.05 | 0.44 | 1.16 | 0.86 | 0.06 | 0.06 | 29.33 | 19.48 | 34 |
| Comparative Example 6 | 0.48 | 0.24 | 0.25 | 2.55 | 2.04 | 1.16 | 0.97 | 0.43 | 0.08 | 27.08 | 24.24 | 31 |
| Comparative Example 7 | 0.42 | 0.39 | 0.05 | 0.09 | 1.51 | 0.87 | 0.78 | 0.37 | 0.08 | 21.68 | 45.31 | 37 |
| Comparative Example 8 | 0.50 | 0.12 | 0.23 | 3.91 | 0.36 | 1.21 | 1.07 | 0.08 | 0.06 | 27.80 | 25.47 | 25 |
| Comparative Example 9 | 0.55 | 0.25 | 0.68 | 2.33 | 1.40 | 1.08 | 2.03 | 0.40 | 0.01 | 27.16 | 24.42 | 36 |
| Comparative Example 10 | 0.51 | 0.35 | 0.85 | 2.67 | 1.78 | 1.10 | 0.64 | 0.64 | 0.05 | 26.41 | 20.95 | 42 |
| Comparative Example 11 | 0.59 | 0.24 | 0.04 | 3.93 | 0.72 | 0.99 | 1.91 | 0.55 | 0.02 | 25.76 | 21.49 | 39 |

(continued)

| | Chemical components (mass%) | | | | | | | | | K1 | K2 | D50 (μm) |
|---|---|---|---|---|---|---|---|---|---|---|---|---|
| | C | Si | Mn | Cr | Ni | Mo | W | V | Al | | | |
| Compara-tive Exam-ple 12 | 0.41 | 0.19 | 0.32 | 2.93 | 1.18 | 0.92 | 0.60 | 0.14 | 0.08 | <u>21.61</u> | 30.13 | 27 |
| Compara-tive Exam-ple 13 | 0.46 | 0.04 | 0.02 | 3.99 | 0.62 | 1.09 | 1.30 | 0.02 | 0.01 | 25.15 | <u>26.37</u> | 72 |

$$K1 = 9.2\,[C] + 3.7\,[Si] + 18.1\,[Mo] + 0.8\,[W]$$

$$K2 = 70.2 - 22.1\,[C] - 1.6\,[Si] - 5.4\,[Mn] - 5.8\,[Cr] - 5.2\,[Ni] - 5.3\,[Mo] - 1.0\,[W] - 2.5\,[V] - 0.3\,[Al]$$

EP 4 260 965 B1

[Shaping]

A shaped article having a cuboid of 10 mm × 10 mm × 10 mm was obtained from each of the Fe-based alloy powders of Examples 1 to 25 and Comparative Examples 1 to 13, by use of a three-dimensional additive manufacturing apparatus (trade name "EOS-M280" manufactured by EOS Japan).

[Heat treatment]

The shaped article obtained was subjected to the following heat treatment (quenching and tempering treatment).

Quenching: retention at 1030°C for 30 minutes, and then oil cooling.
Tempering: repeating of treatment of retention at 600°C for 60 minutes and then air cooling, twice.

[Measurement of heat conductivity]

The heat conductivity was measured by a laser flush method. The shaped article after quenching and tempering treatment was finished into a disc shape having a diameter of 10 mm and a thickness of 1 mm. The heat conductivity at an ordinary temperature is shown in Table 2A and Table 2B.

[Measurement of hardness]

The quenching and tempering hardness was determined by using a Rockwell hardness tester and measuring the hardness of a surface perpendicular to a stacking direction of the shaped article after quenching and tempering treatment. The results are shown in Table 2A and Table 2B.

[Measurement of hardness after retention at high temperature]

The shaped article after quenching and tempering treatment was retained at 600°C for 100 hours and then the hardness thereof was measured by the same method as described above. The results are shown in Table 2A and Table 2B.

[Table 2A]

Table 2A

|  | Heat conductivity (W/m/K) | Hardening and tempering hardness (HRC) | Hardness after retention at 600°C for 100 hours (HRC) |
|---|---|---|---|
| Example 1 | 42.35 | 54.92 | 35.25 |
| Example 2 | 36.31 | 50.39 | 35.41 |
| Example 3 | 48.66 | 56.47 | 34.17 |
| Example 4 | 38.81 | 55.02 | 34.18 |
| Example 5 | 39.36 | 52.24 | 34.43 |
| Example 6 | 49.09 | 49.59 | 33.21 |
| Example 7 | 40.98 | 55.17 | 33.73 |
| Example 8 | 36.36 | 58.51 | 34.90 |
| Example 9 | 41.98 | 56.03 | 33.63 |
| Example 10 | 37.35 | 55.12 | 36.12 |
| Example 11 | 41.10 | 48.23 | 35.17 |
| Example 12 | 36.07 | 55.87 | 34.93 |
| Example 13 | 42.61 | 51.40 | 34.62 |
| Example 14 | 40.54 | 52.71 | 35.95 |

(continued)

|  | Heat conductivity (W/m/K) | Hardening and tempering hardness (HRC) | Hardness after retention at 600°C for 100 hours (HRC) |
|---|---|---|---|
| Example 15 | 34.95 | 53.59 | 37.39 |
| Example 16 | 40.70 | 52.55 | 35.85 |
| Example 17 | 43.69 | 51.52 | 35.04 |
| Example 18 | 34.60 | 54.94 | 35.74 |
| Example 19 | 52.51 | 48.96 | 33.61 |
| Example 20 | 35.01 | 56.07 | 35.66 |
| Example 21 | 42.06 | 53.33 | 34.29 |
| Example 22 | 38.96 | 57.55 | 35.25 |
| Example 23 | 39.29 | 53.49 | 36.22 |
| Example 24 | 45.10 | 52.20 | 35.16 |
| Example 25 | 45.91 | 52.71 | 34.26 |

[Table 2B]

Table 2B

|  | Heat conductivity (W/m/K) | Hardening and tempering hardness (HRC) | Hardness after retention at 600°C for 100 hours (HRC) |
|---|---|---|---|
| Comparative Example 1 | 35.01 | 47.69 | 32.53 |
| Comparative Example 2 | 33.65 | 53.63 | 31.54 |
| Comparative Example 3 | 33.56 | 53.98 | 33.19 |
| Comparative Example 4 | 39.23 | 47.33 | 31.13 |
| Comparative Example 5 | 30.54 | 57.94 | 33.35 |
| Comparative Example 6 | 33.95 | 55.62 | 31.77 |
| Comparative Example 7 | 48.93 | 47.82 | 29.19 |
| Comparative Example 8 | 33.87 | 56.11 | 32.99 |
| Comparative Example 9 | 33.73 | 55.75 | 31.62 |
| Comparative Example 10 | 31.46 | 54.48 | 32.02 |
| Comparative Example 11 | 31.93 | 53.92 | 32.98 |
| Comparative Example 12 | 38.53 | 47.83 | 32.14 |
| Comparative Example 13 | 35.28 | 46.10 | 28.30 |

As shown in Table 1A, the Fe-based alloy powders of Examples 1, 4, 5, 7-10, 12-14, 16-18, 20, 21, 25 satisfied the composition and formulae 1 and 2 prescribed in the present invention. As shown in Table 2A, the shaped articles produced from the Fe-based alloy powders of Examples 1, 4, 5, 7-10, 12-14, 16-18, 20, 21, 25 had a heat conductivity of 34.0 W/m/K or more, were excellent in cooling efficiency, had a hardness after quenching and tempering, of 48.0 HRC or more, had a hardness after retention at a high temperature, of 33.0 HRC or more, and were also excellent in hardness.

On the other hand, as shown in Table 1B and Table 2B, each of the shaped articles produced from the powders of Comparative Examples was inferior in heat conductivity or hardness. For example, Comparative Example 1, in which the amount of C was small and K1 of formula (1) was also low, thus exhibited inferior quenching and tempering hardness and also inferior hardness after retention at a high temperature. Comparative Example 2, in which excess C was present and the amount of unique C was increased, thus exhibited a decreased heat conductivity of steel and also inferior hardness after retention at a high temperature. Comparative Example 3, in which the amount of Si was excess, thus exhibited a decreased heat conductivity. Comparative Example 4, in which the value of K1 of formula (1) was low, thus exhibited inferior quenching and tempering hardness and also inferior hardness after retention at a high temperature. Comparative Example 5, in which Cr was excess and also the value of K2 of formula (2) was low, thus exhibited a decreased heat conductivity. Comparative Example 6, in which Ni was excess and also the value of K2 of formula (2) was low, thus exhibited a decreased heat conductivity and also inferior hardness after retention at a high temperature. Comparative Example 7, in which the amount of Mo was small and also the value of K1 of formula (1) was low, thus exhibited inferior quenching and tempering hardness and also inferior hardness after retention at a high temperature. Comparative Example 8, in which the amount of Mo was excess, thus exhibited a decreased heat conductivity due to the influence of the remaining Mo in a matrix, and also inferior hardness after retention at a high temperature. Comparative Example 9, in which the amount of W was excess, thus exhibited a decreased heat conductivity due to the influence of the remaining W in a matrix, and also inferior hardness after retention at a high temperature. Comparative Example 10, in which the amount of V was excess, thus exhibited a decreased heat conductivity due to the influence of the remaining V in a matrix, and also inferior hardness after retention at a high temperature. Comparative Example 11, in which the value of K2 of formula (2) was low, thus exhibited a decreased heat conductivity and also inferior hardness after retention at a high temperature. Comparative Example 12, in which the value of K1 of formula (1) was low, thus exhibited decreased quenching and tempering hardness and also inferior hardness after retention at a high temperature. Comparative Example 13, in which the value of K2 of formula (2) was low, thus exhibited inferior quenching and tempering hardness and inferior hardness after retention at a high temperature.

INDUSTRIAL APPLICABILITY

The Fe-based alloy powder of the present invention is suitable for production of a shaped article for a hot work tool such as a mold for hot stamping or die-casting, by additive manufacturing.

**Claims**

1.  An Fe-based alloy powder consisting of, in mass%:

$$0.40 < C < 0.70;$$

$$0.03 \leq Si \leq 0.40;$$

$$Mn < 0.90;$$

$$Cr \leq 2.00;$$

$$Ni < 2.00;$$

$$0.90 < Mo < 1.20;$$

$$W < 2.00;$$

$$V < 0.60;$$

$$0.01 \leq Al < 0.10;$$

and

the balance consisting of Fe and unavoidable impurities,
wherein, assuming that:

respective amounts of C, Si, Mn, Cr, Ni, Mo, W, V and Al contained in the Fe-based alloy powder are designated as [C] (mass%), [Si] (mass%), [Mn] (mass%), [Cr] (mass%), [Ni] (mass%), [Mo] (mass%), [W] (mass%), [V] (mass%) and [Al] (mass%);

$$K1 = 9.2 \ [C] + 3.7 \ [Si] + 18.1 \ [Mo] + 0.8 \ [W];$$

and

$$K2 = 70.2 - 22.1 \ [C] - 1.6 \ [Si] - 5.4 \ [Mn] - 5.8 \ [Cr] - 5.2 \ [Ni] - 5.3 \ [Mo] - 1.0 \ [W] - 2.5 \ [V] - 0.3 \ [Al],$$

the Fe-based alloy powder satisfies formulae (1) and (2):

$$K1 \geq 24.0 \quad (1)$$

$$K2 > 29.0 \quad (2),$$

wherein the Fe-based alloy powder has an average particle size $D_{50}$ of 200 $\mu$m or less, and wherein the average particle size $D_{50}$ is measured by a laser diffraction scattering method.

**Patentansprüche**

1. Fe-basiertes Legierungspulver, bestehend aus, in Masse-%:

$$0,40 < C < 0,70;$$

$$0,03 \leq Si \leq 0,40;$$

$$Mn < 0,90;$$

$$Cr \leq 2,00;$$

$$Ni < 2,00;$$

$$0,90 < Mo < 1,20;$$

$$W < 2,00;$$

$$V < 0,60;$$

$$0,01 \leq Al < 0,10;$$

und

wobei der Rest aus Fe und unvermeidbaren Verunreinigungen besteht,
wobei, unter der Annahme, dass:

die jeweiligen Mengen an C, Si, Mn, Cr, Ni, Mo, W, V und Al, die im Febasierten Legierungspulver enthalten sind, als [C] (Masse-%), [Si] (Masse-%), [Mn] (Masse-%), [Cr] (Masse-%), [Ni] (Masse-%), [Mo] (Masse-%), [W] (Masse-%), [V] (Masse-%) und [Al] (Masse-%) bezeichnet werden;

$$K1 = 9{,}2\,[C] + 3{,}7\,[Si] + 18{,}1\,[Mo] + 0{,}8\,[W];$$

und

$$K2 = 70{,}2 - 22{,}1\,[C] - 1{,}6\,[Si] - 5{,}4\,[Mn] - 5{,}8\,[Cr] - 5{,}2\,[Ni] - 5{,}3\,[Mo] - 1{,}0\,[W] - 2{,}5\,[V] - 0{,}3\,[Al],$$

das Fe-basierte Legierungspulver die Formeln (1) und (2) erfüllt:

$$K1 \geq 24{,}0 \qquad (1)$$

$$K2 > 29{,}0 \qquad (2),$$

wobei das Fe-basierte Legierungspulver eine mittlere Teilchengröße $D_{50}$ von 200 $\mu$m oder weniger aufweist, und
wobei die durchschnittliche Teilchengröße $D_{50}$ durch ein Laserbeugungsstreuungsverfahren gemessen wird.

**Revendications**

1. Poudre d'alliage à base de Fe constituée de, en % en masse :

$$0{,}40 < C < 0{,}70\ ;$$

$$0{,}03 \leq Si \leq 0{,}40\ ;$$

$$Mn < 0{,}90\ ;$$

$$Cr \leq 2{,}00\ ;$$

$$Ni < 2{,}00\ ;$$

$$0{,}90 < Mo < 1{,}20\ ;$$

$$W < 2{,}00\ ;$$

$$V < 0{,}60\ ;$$

$$0{,}01 \leq Al < 0{,}10\ ;$$

et

l'équilibre constitué de Fe et d'impuretés inévitables,
dans laquelle, en supposant que :

des quantités respectives de C, SI, Mn, Cr, Ni, Mo, W, V et Al contenus dans la poudre d'alliage à base de Fe sont désignées par [C] (% en masse), [Si] (% en masse), [Mn] (% en masse), [Cr] (% en masse), [Ni] (% en masse), [Mo] (% en masse, [W] (% en masse), [V] (% en masse) et [Al] (% en masse) ;

$$K1 = 9{,}2\,[C] + 3{,}7\,[Si] + 18{,}1\,[Mo] + 0{,}8\,[W]\ ;$$

et

K2 = 70,2 - 22,1 [C] - 1,6 [Si] - 5,4 [Mn] - 5,8 [Cr] - 5,2 [Ni] - 5,3 [Mo] - 1,0 [W] - 2,5 [V] - 0,3 [Al],

la poudre d'alliage à base de Fe satisfait les formules (1) et (2) :

$$K1 \geq 24,0 \qquad (1)$$

$$K2 > 29,0 \qquad (2),$$

dans laquelle la poudre d'alliage à base de Fe a une taille particulaire moyenne $D_{50}$ de 200 $\mu$m ou moins, et dans laquelle la taille particulaire moyenne $D_{50}$ est mesurée par un procédé de dispersion par diffraction laser.

**EP 4 260 965 B1**

**Patent documents cited in the description**

- JP 2008081840 A
- JP 2018119177 A
- JP 2015224363 A
- WO 2019220917 A1
- JP 2019085633 A